# EUROPÄISCHE PATENTANMELDUNG

(11) **EP 1 857 264 A1**
(43) Veröffentlichungstag der Anmeldung: **21.11.2007**
(21) Anmeldenummer: 07009109.5
(22) Anmeldetag: 05.05.2007
(51) Int. Cl.: B29D 30/54, B29D 30/72

(54) **Verfahren zur Reparatur eines Reifens und hiernach hergestellter Reifen**

(30) Priorität: 17.05.2006 DE 102006023007
(71) Anmelder: Reifen-Ihle GmbH, 89302 Günzburg (DE)
(72) Erfinder: Reif, Wolfgang, 89312 Günzburg (DE); Kraft, Erich, 89312 Günzburg (DE); Köstler, Christian, 89312 Günzburg (DE)
(74) Vertreter: Munk, Ludwig

(57) **Zusammenfassung**

Bei der Reparatur eines Reifens, insbesondere LKW- oder EM-Reifens an einer Seitenwand lassen sich dadurch eine gute Wirtschaftlichkeit und hohe Zuverlässigkeit erreichen, dass der Reifen im Bereich der betroffenen Seitenwand komplett runderneuert wird.

## Beschreibung

Die Erfindung betrifft gemäß einem ersten Erfindungsgedanken ein Verfahren zur Reparatur eines Reifens, insbesondere eines LKW- oder EM-Reifens, zumindest an einer Seitenwand.
Ein weiterer Erfindungsgedanke betrifft einen hiernach hergestellten Reifen.

Die Runderneuerung von Reifen oben genannter Art bezieht sich bisher ausschließlich auf die umfangsseitige Lauffläche. Bei einer vorhandenen Beschädigung der Seitenwand wird diese bisher lediglich lokal ausgebessert. Dies ist umständlich und nicht zuverlässig genug. Ein weiterer Nachteil ist darin zu sehen, dass hierbei die in der Regel im Bereich der Seitenwände vorhandene Kennzeichnung des alten Reifens erhalten bleibt. Vielfach ist es jedoch erwünscht bzw. erforderlich, einen runderneuerten Reifen mit einer neuen Kennzeichnung zu versehen. Dies erfordert bisher ein ähnliches Vorgehen wie bei der Ausbesserung von seitlichen Beschädigungen.

Hiervon ausgehend ist es daher die Aufgabe der vorliegenden Erfindung, unter Vermeidung der oben geschilderten Nachteile ein Verfahren eingangs erwähnter Art zu schaffen, das eine saubere Seitenwand ergibt und die Anbringung einer neuen Beschriftung erleichtert.

Diese Aufgabe wird erfindungsgemäß dadurch gelöst, dass der Reifen auf der betroffenen Seitenwand komplett runderneuert wird.

Hierdurch wird erreicht, dass eine vorhandene alte Beschriftung abgedeckt wird und gleichzeitig im selben Arbeitsgang eine neue Beschriftung angebracht werden kann, so dass sich insgesamt eine rationelle Arbeitsweise ergibt. Außerdem können an die neue Seitenwand auf einfache Weise auch zusätzliche Elemente, wie Scheuerleisten etc. angeformt werden. Die erfindungsgemäßen Maßnahmen ermöglichen daher in vorteilhafter Weise auch eine Erhöhung der Sicherheit. Zudem gewährleistet die runderneuerte Seitenwand auch ein sauberes Aussehen, so dass sich insgesamt eine zuverlässige Wertsteigerung ergibt.

Zweckmäßig kann zur Runderneuerung der Seitenwand eine umlaufende, eine der gewünschten Außenkontur der neuen Seitenwand entsprechende Innenkontur aufweisende, vorzugsweise aus gummielastischem Material bestehende Schablone Verwendung finden, die unter Einschluss von Rohgummi im Bereich der betroffenen Seitenwand an dem Reifen angelegt und in radialer Richtung fixiert wird. Die Verwendung einer Schablone ermöglicht die Erzielung einer hohen Maßgenauigkeit. Gleichzeitig fungiert die Schablone als Matrize zur Anbringung einer gewünschten Beschriftung.

Dadurch, dass die Schablone in radialer Richtung fixiert wird, sind Verschiebungen ausgeschlossen, was in vorteilhafter Weise eine Runderneuerung im Kalt-Vulkanisationsverfahren ermöglicht, bei dem der Reifen samt Schablone in einen evakuierbaren Anpressschlauch eingepackt wird. In Folge der gummielastischen Eigenschaften kann sich die Schablone dabei unter Ausgleich von Unebenheiten sauber an die Unterlage anlegen bzw. den Rohgummi in der gewünschten Weise anpressen, so dass sich eine hohe Oberflächengenauigkeit ergibt. Die Runderneuerung im Kalt- Vulkanisationsverfahren gewährleistet in vorteilhafter Weise auch bei Großreifen eingangs erwähnter Art eine rationelle Arbeitsweise und hohe Wirtschaftlichkeit.

Vorteilhaft kann bei der Seitenwand-Erneuerung so vorgegangen werden, dass im Bereich der betroffenen Seitenwand der alte Seitenbelag entfernt wird, dass dann auf die so freigelegte Reifenkarkasse das Material für einen neuen Seitenbelag in Form eines umlaufenden Rohgummi-Streifens aufgelegt wird, dass dann dieser mittels der Schablone, die in radialer Richtung fixiert wird, abgedeckt wird und dass anschließend die belegte Karkasse samt Schablone in den erwähnten Anpressschlauch eingehüllt und nach Evakuierung des Anpressschlauches zur Kalt-Vulkanisation in einem Autoklaven mit Druck und Wärme beaufschlagt wird.

Hiermit lässt sich auf besonders rationelle Weise ein ausgezeichnetes Arbeitsergebnis erreichen.

Evtl. Beschädigungen der Karkasse können zweckmäßig vor dem Auflegen des Materials für die neue Seitenwand mit Rohgummi ausgefüllt werden.

Zweckmäßig besteht die an der Vulkanisationsbehandlung teilnehmende Schablone aus einem druck- und temperaturbeständigen, gummielastischen Material.

Um die zweckmäßig aus einem gummielastischen Material hergestellte Schablone nach Beendigung der Vulkanisationsbehandlung leicht entfernen zu können, wird die Schablone zweckmäßig vor der Anbringung auf ihrer Innenseite mit einem Trennmittel, beispielsweise Silikon oder Seife, behandelt.

Eine besonders zu bevorzugende Ausgestaltung der übergeordneten Maßnahmen sieht vor, dass der Reifen gleichzeitig an der Oberfläche und an wenigstens einer Seitenwand, vorzugsweise an beiden Seitenwänden, komplett runderneuert wird. Hiermit lässt sich eine besonders hohe Wertsteigerung erreichen.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: einen Teilschnitt durch einen umfangsseitig und seitlich runderneuerten Reifen,
- Figur 2: eine Verdeutlichung, von bei der Seitenwand-Erneuerung aufeinanderfolgenden Arbeitsschritten anhand einer explosionsartigen Darstellung,
- Figur 3: einen Teilquerschnitt durch einen in einen evakuierbaren Anpressschlauch eingepackten Rohling mit angelegter Schablone und
- Figur 4: eine schematische Darstellung eines mit Rohlingen gemäß Figur 3 bestückten Autoklaven.

Hauptanwendungsgebiet der vorliegenden Erfindung sind Großreifen in Form von LKW und/oder EM-Reifen, vorzugsweise bis zu einer Materialstärke von ca. 10 cm im Stollenbereich. Bei derartigen Reifen unterliegen nicht nur die umfangsseitige Lauffläche, sondern auch die Seitenwände einer hohen Beanspruchung. Eine Runderneuerung lediglich der umfangsseitigen Lauffläche beseitigt daher vielfach nicht alle Beschädigungen. Erfindungsgemäß werden Reifen der genannten Art daher zumindest im Bereich einer beschädigten Seitenwand ähnlich wie die umfangsseitige Lauffläche komplett runderneuert.

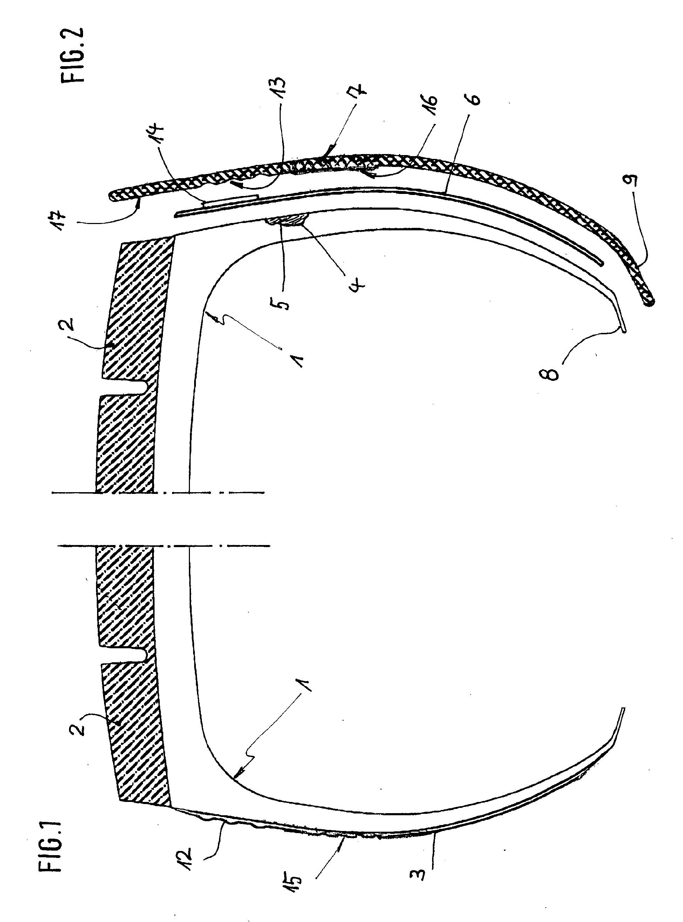

Der Figur 1 liegt ein derart runderneuerter Reifen zugrunde. Den inneren Bereich des Reifens bildet eine mit hier nicht näher dargestellten Verstärkungselementen versehene, tragende Karkasse 1, auf die bei der Runderneuerung ein neuer, umfangsseitiger Laufstreifen 2 und/oder erfindungsgemäß wenigstens ein neuer Seitenbelag 3 aufgebracht wird. Zweckmäßig wird auf beiden Seiten ein neuer Seitenbelag 3 vorgesehen. Die Runderneuerung der Lauffläche ist an sich bekannt. Hierauf wird daher nicht näher eingegangen.

Zur Erneuerung des Seitenbelags 3 wird, wie in Figur 2 angedeutet ist, im Bereich der betroffenen Seitenwand der alte Seitenbelag entfernt, wodurch die tragende Karkasse 1 seitlich freigelegt wird. Die Entfernung des alten Seitenbelags kann durch Abfräsen oder Abraspeln etc. erfolgen. Sofern die Karkasse 1 im Bereich der betroffenen Seitenwand Beschädigungen der bei 4 angedeuteten Art aufweist, werden diese nach Beendigung des Abrauhvorgangs mit einer Rohgummi-Füllung 5 versehen, so dass sich eine durchgehende, ununterbrochene Oberfläche ergibt.

Auf die abgerauhte und gegebenenfalls ausgebesserte Seitenwand der Karkasse 1 wird anschließend das Material für einen neuen Seitenbelag aufgelegt. Hierzu findet ein in Figur 2 angedeuteter Rohgummi-Streifen 6 Verwendung. Dieser kann als Ring ausgebildet sein oder durch ein von einer Spule abgewickeltes, in der richtigen Länge abgeschnittenes Band gebildet werden. In jedem Fall entspricht das Volumen des Rohgummi-Streifens 6 dem Volumen des herzustellenden neuen Seitenbelags. Zweckmäßig erstreckt sich der Rohgummi-Streifen 6, wie Figur 2 weiter erkennen lässt, über die ganze Höhe der Seitenwand der Karkasse 1 vom Bereich der radial äußeren Schulter bis zum Bereich der radial inneren Felgenwulst, was die Verteilung des Rohgummis über die ganze Höhe der Seitenwand erleichtert. Selbstverständlich wäre es auch denkbar, in Bereichen, in denen die Dicke der neuen Seitenwand zunimmt, auch eine entsprechende Verdickung des Rohgummi-Streifens 6 vorzusehen.

Zur Formung und Fixierung des Rohgummi-Streifens 6 findet eine umlaufende Schablone 7 Verwendung, durch welche der auf die betroffene Seitenwand der Karkasse 1 aufgelegte Rohgummi-Streifen 6 abgedeckt wird. Die Innenkontur der Schablone 7 entspricht dabei der gewünschten Außenkontur des neuen Seitenbelags. Die Schablone 7 besteht zweckmäßig aus einem gummielastischen Material, das sich satt an die zugeordnete Unterlage anlegen und kleinere Unebenheiten ausgleichen kann. Die Schablone 7 wird einfach auf die betroffene Seite der Karkasse 1 aufgesteckt. Die Schablone 7 stützt sich dabei mit ihrem radial äußeren Rand an den Seitenkanten des Laufstreifens 2 und mit ihrem radial inneren Rand am Felgenwulst 8 der Karkasse 1 ab. Die Schablone 7 erstreckt sich dementsprechend in radialer Richtung vom Bereich des Laufstreifens 2 bis in den Bereich des Felgenwulsts 8. Sofern eine Runderneuerung auch im Bereich der Lauffläche erfolgt, soll der neue Laufstreifen 2 auf den Umfang der Karkasse 1 bereits aufgelegt sein, bevor die Schablone 7 angelegt wird.

Zur Gewährleistung einer sicheren Lage der Schablone 7 wird diese in radialer Richtung fixiert. Hierzu ist die Schablone 7 im Bereich ihres radial inneren Rands mit einem zumindest teilweise vorzugsweise ganz umlaufenden Zentrierflansch 9 versehen, der zum Eingriff mit dem radial inneren Randbereich der Karkasse 1 bringbar ist.

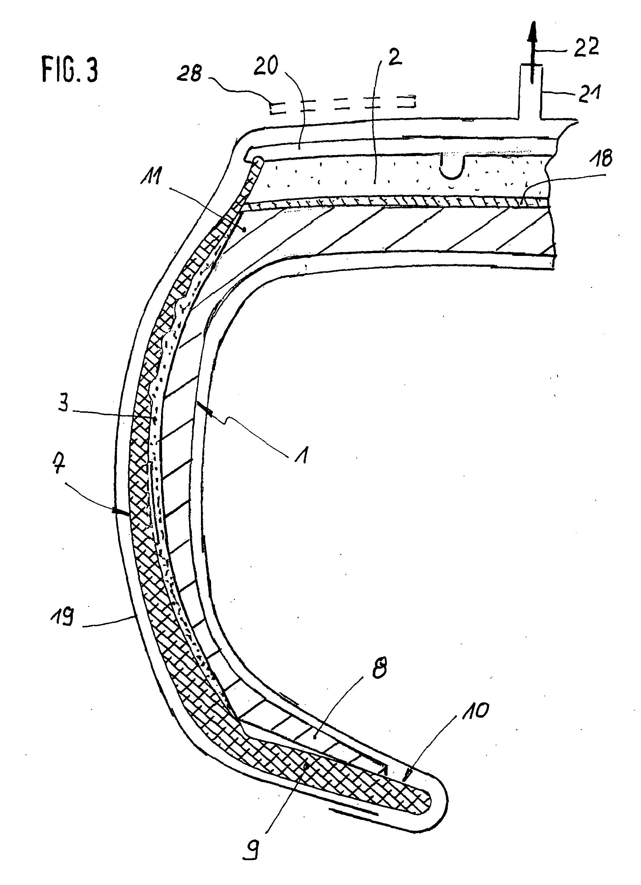

Die Figur 3 zeigt den Zustand mit angelegter Schablone 7, die am Laufstreifen 2 und am radial inneren Bereich der Karkasse 1 abgestützt ist. Der zum Eingriff mit der Felgenwulst 8 bringbare Zentrierflansch 9 besitzt zweckmäßig eine konische Anlagefläche 10, die so geneigt ist, dass sich eine stramme Anlage an der zugewandten Fläche der Felgenwulst 8 und damit ein zuverlässiger, rutschsicherer Sitz der Schablone 7 ergibt. Diese wird mit dem Zentrierflansch 9 einfach in die durch den Felgenwulst 8 begrenzte Öffnung der Karkasse 1 eingesteckt.

Die Schablone 7 ist, wie Figur 3 weiter erkennen lässt, so ausgebildet und liegt so an der Karkasse 1 an, dass der neue Seitenbelag 3 mittels der Schablone 7 am radial inneren und am radial äußeren Rand stetig sich verjüngend ausläuft. Hierzu liegt die Schablone 7 im Bereich der oberen Kante der Schulter 11 sowie im Bereich der Kante zwischen Seitenwand und Felgenflansch 8 an der Karkasse 1 an. Dies wird dadurch erreicht, dass die Innenkontur des oberen Randbereichs der Schablone 7 der Außenkontur des Laufstreifens 2 bis zur oberen Kante der Schulter 11 folgt und dass die Anlagefläche 10 des Zentrierflansches 9 der Schablone 7 mit der benachbarten Innenseite der Schablone 7 einen größeren Winkel einschließt als die Außenseite der Felgenwulst 8 mit der benachbarten Außenseite der Seitenwand der Karkasse 1.

Im dargestellten Beispiel enthält der neue Seitenbelag 3 im radial äußeren, der Schulter 11 benachbarten Bereich zur Seite erhabene, umlaufende Scheuerleisten 12, die in Figur 1 angedeutet sind. Die Schablone 7 ist zur Bildung der Scheuerleisten 12 mit vertieften Rillen 13 versehen, wie aus Figur 2 ersichtlich ist. Um genügend Material für die Scheuerleisten 12 zur Verfügung zu stellen, kann der Rohgummi-Streifen 6 im Bereich der Rillen 13 verdickt sein, wie in Figur 2 durch die Verdickung 14 angedeutet ist.

Mit Hilfe der Schablone 7 kann in den neuen Seitenbelag 3 auch eine neue, in Figur 1 bei 15 angedeutete Kennzeichnung eingeprägt werden. Die Schablone 7 ist hierzu mit einem geeigneten, in Figur 2 angedeuteten Prägestock 16 versehen. Dieser ist im dargestellten Beispiel erhaben ausgebildet, so dass die hiermit geprägte Kennzeichnung im neuen Seitenbelag 3 vertieft erscheint, wie in Figur 1 angedeutet ist. Eine auf dem alten Seitenbelag vorhandene, alte Kennzeichnung wird bei der Entfernung des alten Seitenbelags entfernt. Sofern nach der Abrauhung der Karkasse 1 noch Reste der alten Kennzeichnung vorhanden sein sollten, werden diese durch den neuen Seitenbelag vollständig überdeckt.

Die Schablone 7 kann zweckmäßig als aus druck- und temperaturbeständigem Gummi bzw. Gummiersatzstoff bestehender Vulkanisationsformling hergestellt werden. Zweckmäßig können dabei ähnlich wie bei der Karkasse 1 durch eingelegte Leinwandstreifen und/oder Drähte gebildete Verstärkungen vorgesehen sein. Vor der Anbringung der Schablone 7 wird diese auf ihrer Innenseite mit einem in Figur 2 durch einen Pfeil 17 angedeuteten Trennmittel, beispielsweise Silikon und/oder Seife so behandelt, dass sich ein dünner Oberflächenfilm ergibt, der eine Vulkanisationsverbindung mit dem neuen Seitenbelag verhindert und eine einfache Demontage der Schablone 7 nach der Vulkanisation des neuen Seitenbelags 3 ermöglicht.

Die Vulkanisation des Seitenbelags bzw. der Seitenbeläge 3 und einer unterhalb eines bereits vorvulkanisierten Laufstreifens 2 angebrachten, in Figur 3 angedeuteten Bindegummi-Streifens 18 erfolgt, wie schon erwähnt, durch Kalt-Vulkanisation. Hierzu wird die in der oben beschriebenen Weise belegte Karakasse 1 samt Schablone 7, bei Runderneuerung beider Seiten samt beider Schablonen 7 in einen in Figur 3 angedeuteten, evakuierbaren Anpressschlauch 19 (Envelop) eingehüllt. Auf die Lauffläche des Laufstreifens 2 wird dabei wenigstens ein sogenannter Entlüftungslappen 20 aufgelegt, der über die Breite des Laufstreifens 2 durchgeht und auch den oberen Rand der Schablone 7 bzw. Schablonen 7 übergreift, wie in Figur 3 erkennbar ist. Der Entlüftungslappen 20 stellt eine Strömungsverbindung zwischen den seitlichen Außenbereichen des Innenraums des Anpressschlauchs 19 untereinander sowie mit dem Evakuierstutzen 21 des Anpressschlauchs 19 dar. Anschließend wird der Anpressschlauch 19 evakuiert, wie in Figur 3 durch den Pfeil 22 angedeutet ist. Dabei wird der Anpressschlauch 19 stramm an die jeweils gegenüberliegende Fläche von Karkasse 1 bzw. Schablone 7 und Laufstreifen 2 angepresst, wodurch das Material des zwischen Karkasse 1 und Schablone 7 eingeschlossenen Rohgummi-Streifens 6 in der gewünschten Weise verteilt und mit den gewünschten Prägungen versehen wird.

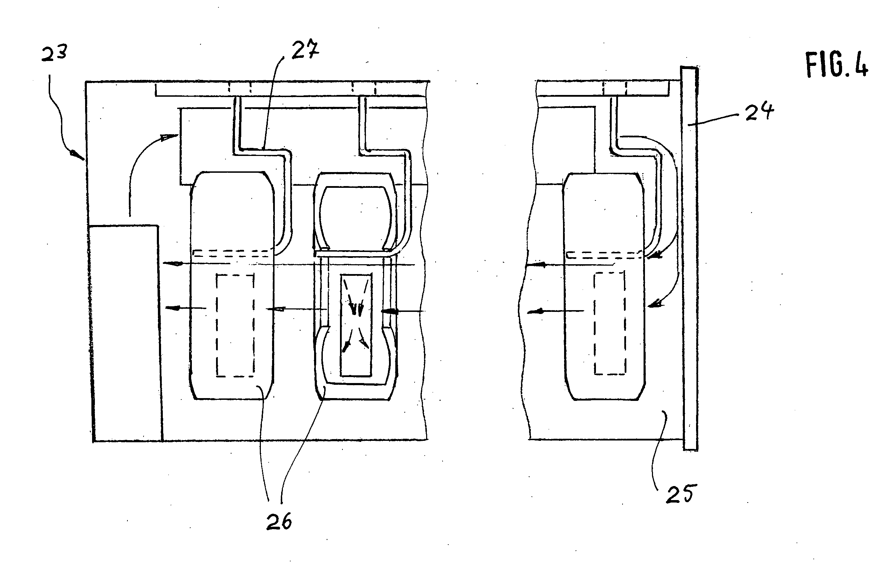

Anschließend erfolgt eine Beaufschlagung mit Druck und Wärme in einem Autoklaven, der der Figur 4 zugrundeliegenden Art. Der in Figur 4 schematisch dargestellte Autoklav 23 besitzt einen mittels eines Deckels 24 verschließbaren Innenraum 25, der beheizbar und an eine Druckquelle anschließbar ist. In den Innenraum 25 wird eine Anzahl von Rohlingen 26 eingebracht. Diese werden jeweils auf einen Bügel 27 aufgenommen. Die Bügel 27 sind auf einer Laufschiene gelagert und können bei abgenommenem Deckel 24 in den Innenraum 25 eingefahren werden.

Nach einer derartigen Bestückung des Innenraums 25 wird dieser verschlossen und dann mit Druck und Wärme beaufschlagt. Die Druckbeaufschlagung liegt im Bereich vom 5 bis 7 bar, vorzugsweise bei 6 bar. Die Wärmebeaufschlagung erfolgt so, dass sich eine Temperatur von 100° C bis 120° C vorzugsweise 110° C ergibt. Die Behandlungsdauer ist abhängig vom Vulkanisationsvolumen. Bei kleineren LKW-Reifen ergibt sich eine Behandlungsdauer von etwa 3 Stunden, bei EM-Reifen von etwa 5 Stunden. Während der Behandlung im Autoklaven 23 bleibt der Anpressschlauch 19 an eine Vakuumquelle angeschlossen. Die Evakuierung erfolgt bis zu einem Unterdruck von 0,6 bar.

Zweckmäßig wird, wie schon erwähnt, neben einem Seitenbelag 3 oder beiden Seitenbelägen 3 auch der Laufstreifen 2 erneuert. Hierzu wird der alte Laufstreifen entfernt. Anschließend wird auf die umfangsseitig freigelegte Karkasse 1 der oben bereits erwähnte, aus Figur 3 ersichtliche Bindegummi-Streifen 18 aufgelegt. Auf diesen wird ein bereits vorvulkanisierter Laufstreifen 2 aufgebracht. Die Entfernung des alten Laufstreifens und der alten Seitenbeläge kann zweckmäßig in einem gemeinsamen Arbeitsgang erfolgen. Anschließend wird zunächst der Laufstreifen 2 angebracht, bevor die seitliche Schablone 7 bzw. seitlichen Schablonen 7 unter Zwischenschaltung jeweils eines Rohgummi-Streifens 6 angelegt wird bzw. werden. Der Laufstreifen 2 ist zweckmäßig so ausgebildet, dass seine Innenfläche in Umfangs- und Achsrichtung entsprechend der Wölbung der Umfangsfläche der Karkasse 1 in Umfangs- und Achsrichtung gewölbt ist. Auf diese Weise lassen sich Spannungen ausschließen und ein sog. Schulteraufbau vermeiden. Zur Gewährleistung einer besonders guten, blasenfreien Anlage des Laufstreifens 2, dessen Innenkontur zweckmäßig der Außenkontur der vorbereiteten Karkasse 1 dreidimensional angepasst ist, an der Karkasse 1, können hier zusätzlich zum Andrückschlauch 19 umfangsseitig umlaufende, innerhalb oder außerhalb des Andrückschlauchs 19 angeordnete Spannringe oder -gurte Verwendung finden, wie in Figur 3 bei 28 angedeutet ist.

## Patentansprüche

1. Verfahren zur Reparatur eines Reifens, insbesondere eines LKW- oder EM-Reifens, zumindest an einer Seitenwand, **dadurch gekennzeichnet, dass** der Reifen im Bereich jeder betroffenen Seitenwand komplett runderneuert wird.

2. Verfahren nach Anspruch 1, **dadurch gekennzeichnet, dass** zur Runderneuerung der Seitenwand eine umlaufende, eine der gewünschten Außenkontur der runderneuerten Seitenwand entsprechende Innenkontur aufweisende, vorzugsweise aus gummielastischem Material stehende Schablone (7) verwendet wird, die unter Einschluss von zur Bildung eines neuen Seitenbelags (3) vorgesehenem Rohgummi im Bereich der betroffenen Seitenwand an den Reifen angelegt und in radialer Richtung fixiert wird, wobei die Runderneuerung vorzugsweise unter Verwendung eines den Reifen samt Schablone bzw. Schablonen (7) umfassenden, evakuierbaren Anpressschlauchs (19) im Kalt-Vulkanisationsverfahren durchgeführt wird.

3. Verfahren nach einem der vorhergehenden Ansprüche, **dadurch gekennzeichnet, dass** im Bereich jeder betroffenen Seitenwand der alte Seitenbelag entfernt wird, dass auf die so freigelegte Karkasse (1) das Material für einen neuen Seitenbelag (3) in Form eines umlaufenden Rohgummi-Streifens (6) aufgelegt wird, dass dieser mittels der umlaufenden, in radialer Richtung fixierten gummielastischen Schablone (7) abgedeckt wird und dass anschließend die belegte Karkasse 1 samt Schablone bzw. Schablonen (7) in den Anpressschlauch (19) eingehüllt und nach Evakuierung des Anpressschlauchs (19) zur Kalt-Vulkanisation in einem Autoklaven (23) mit Druck und Wärme beaufschlagt wird.

4. Verfahren nach einem der vorhergehenden Ansprüche, **dadurch gekennzeichnet, dass** der neue Seitenbelag (3) mittels der Schablone (7) im Bereich des radial inneren Rands und des radial äußeren Rands stetig sich verjüngend ausgebildet wird.

5. Verfahren nach einem der vorhergehenden Ansprüche, **dadurch gekennzeichnet, dass** in den neuen Seitenbelag (3) mittels der Schablone (7) eine neue Reifenkennzeichnung (15) eingeprägt wird und dass vorzugsweise an den neuen Seitenbelag (3) mittels der Schablone (7) erhaben ausgebildete, umlaufende Scheuerleisten (12) angeformt werden, wobei der Rohgummi-Streifen (6) vorzugsweise in einer Verdickung des Seitenbelags (3) zugeordneten Bereichen mit einer Verdickung (14) versehen ist.

6. Verfahren nach einem der vorhergehenden Ansprüche, **dadurch gekennzeichnet, dass** Beschädigungen der Karkasse (1) vor dem Auflegen des Materials für die neue Seitenwand (3) mit einer Rohgummi-Füllung (5) versehen werden.

7. Verfahren nach einem der vorhergehenden Ansprüche, **dadurch gekennzeichnet, dass** die Schablone (7) vor der Anbringung auf ihrer Innenseite mit einem Trennmittel behandelt wird.

8. Verfahren nach einem der vorhergehenden Ansprüche, **dadurch gekennzeichnet, dass** die Schablone (7) mit ihrem radial äußeren Rand an einem auf der Karkasse (1) sich befindenden Laufstreifen (2) und mit ihrem radial inneren Rand am radial inneren Randbereich der Karkasse (1), vorzugsweise im Bereich des Beginns der Felgenwulst (8) der Karkasse (1) abgestützt wird, wobei die Schablone (7) radial innen einen zumindest teilweise umlaufenden Zentrierflansch (9) mit einer konischen Anlagefläche (10) aufweist und mit diesem zur Fixierung in radialer Richtung zum Eingriff mit der Felgenwulst (8) der Karkasse (1) gebracht wird.

9. Verfahren nach einem der vorhergehenden Ansprüche, **dadurch gekennzeichnet, dass** unter dem Anpressschlauch (19) wenigstens ein die Lauffläche des Reifens und den benachbarten Rand der Schablone (7) bzw. Schablonen (7) überquerender Entlüftungslappen (20) angebracht wird.

10. Verfahren nach einem der vorhergehenden Ansprüche, **dadurch gekennzeichnet, dass** der Reifen gleichzeitig an der Lauffläche und wenigstens einer Seitenwand, vorzugsweise an beiden Seitenwänden, runderneuert wird.

11. Reifen, vorzugsweise LKW- oder EM-Reifen, **dadurch gekennzeichnet, dass** wenigstens eine Seitenwand, vorzugsweise beide Seitenwände und vorzugsweise auch die Lauffläche komplett runderneuert sind.

12. Reifen nach Anspruch 16 oder 17, **dadurch gekennzeichnet, dass** wenigstens eine runderneuerte Seitenwand eine neue Reifenkennzeichnung enthält.
